# EUROPEAN PATENT SPECIFICATION

(11) **EP 2 781 430 B1**
(45) Date of publication and mention of the grant of the patent: **11.07.2018**
(21) Application number: 14161148.3
(22) Date of filing: 21.03.2014
(51) Int. Cl.: B62B 7/06

(54) **Child's folding pushchair**
Zusammenklappbarer Kinderbuggy
Poussette pliante pour enfant

(30) Priority: 21.03.2013 ES 201300255
(43) Date of publication of application: 24.09.2014
(73) Proprietor: BÉBÉCAR - Utilidades para Criança, S.A., 4509-903 Caldas de S. Jorge (PT)
(72) Inventor: Santos, Emanuel F, 4505-689 Caldas de S. Jorge (PT); Ferreira, Valdemar A, 4520-615 S. João de Vêr (PT)
(74) Representative: Intès, Didier Gérard André

(56) References cited:
- CN-U- 202 518 308
- DE-U1-202009 014 572
- US-A1- 2003 085 551
- US-A1- 2006 071 451
- US-A1- 2007 096 434
- US-A1- 2011 148 076
- US-A1- 2011 181 024
- US-A1- 2011 248 479
- US-A1- 2012 032 419

## Description

### Background

The present invention is related to children's pushchairs, proposing a pushchair of this type with a folding structure according to the mechanism known as "umbrella fold" with features that make the folding structure more resistant and stable to bear the child's weight in accordance with its application, fully maintaining the conditions of foldability.

### Prior art

There are many types of wheeled pushchairs available for transporting children, which usually have a folding structure to facilitate storage in small spaces and introduction into car baggage compartments. Each of documents US2006/0071451 A1, DE202009014572 U1 and US2003/0085551 A1 discloses a folding child's pushchair having the combination of the features of the preamble of present claim 1. One type of folding system for these children's pushchairs is, for example, the one known as "umbrella fold" in which the structural assembly is folded in the central area thanks to joints that link the rear half of the structure with the front half of the structure.

In the known versions of this type of children's pushchair, the folding joints are determined by simple articulated connections that allow turning between the parts that they join together, with the unfolded position being maintained by a support that halts the turning and bears the pressure of the weight of the structure and the load that is placed on the pushchair, without any retaining blocking mechanism that prevents folding, which is an unsatisfactory solution because it does not provide any stability or rigidity for the structural assembly in use of the pushchair.

### Subject of the invention

The invention proposes a child's folding pushchair according to present claim 1 with features in the folding joints that improve functionality and structural stability for the use of the pushchair.

This pushchair that is the subject of the invention is made up of articulated structural parts, the connection between which is established by hinge joints that allow rotation so that the structural assembly can be folded, with these hinge joints incorporating a mechanism that blocks the rotation when the structural assembly is in the unfolded position, which determines that said structural assembly of the pushchair is highly resistant and stable against the efforts that the use of the pushchair makes it necessary to support.

The rotation blocking mechanism is made up of a mobile latch part that is incorporated into the structural part that corresponds to the pushchair handle structure, said mobile latch part being connected, via a cable, to an activation trigger that is fitted to the handle area, while the other part that makes up the mechanism is a fixed retaining part, with respect to which the mobile latch part locks and unlocks to block and unblock the joint.

This method gives a very simple mechanism that is easy to activate, which blocks the joints of the pushchair in the unfolded position, thus ensuring full rigidity of the structural assembly in said unfolded position, which improves the safety and comfort of the pushchair during use.

In addition, the hinge joints for folding the structural assembly incorporate an assembly coupling for a crossbar to support the child using the pushchair, with a mechanism in this coupling that allows this crossbar for supporting the child using the pushchair to be maintained in complete safety in the position of use, nonetheless allowing this crossbar to be folded down in combination with the folding of the pushchair to achieve the pushchair to be fully placed in the folded position.

This assembly coupling for a crossbar to support the child using the pushchair is determined by a formation of the hinge joints of the pushchair joints with three parts in the form of discs coupled to each other, two of which parts are attached to the structural parts of the pushchair and present grooves facing in such a way that their facing zone varies when the joint of the hinge joint is rotated, while the third part is free and has a perpendicular tab that runs through the grooves of the other two parts, with this third part having a radial fitting housing for attaching the crossbar supporting the child using the pushchair.

This gives an assembly mechanism of the crossbar supporting the child using the pushchair, by which the crossbar remains immobile in the position of use when the pushchair is unfolded; and while the pushchair is being folded this crossbar remains freely collapsible so that the pushchair assembly can be completely folded up.

The above-mentioned features give the pushchair that is the subject of the invention an advantage, making it preferable compared to the traditional pushchairs of the same type that are currently known.

### Description of figures

Figure 1 shows a side view of the structural assembly of a child's pushchair like the one of the invention.
Figure 2 is an exploded perspective view of a folding hinge joint of a child's pushchair according to the invention.
Figure 3 is a perspective view of the crossbar assembly in a child's pushchair according to the invention.

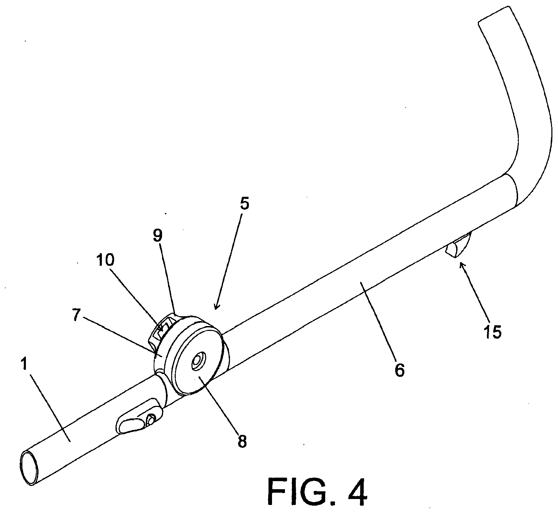

Figure 4 is a perspective view of the connection of one arm of the handle with front upright of a child's pushchair according to the invention.

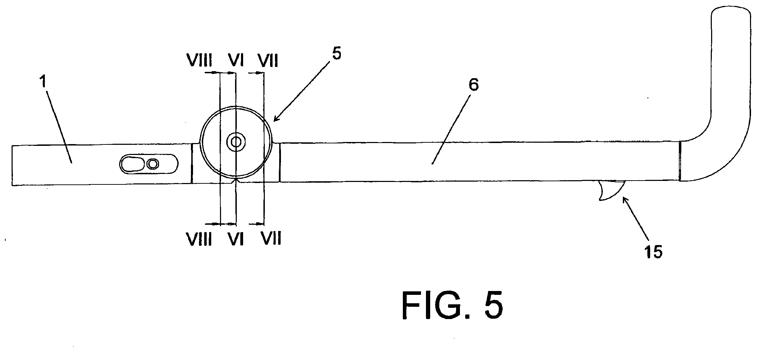

Figure 5 is a side view of the representation of the previous figure.
Figure 6 is a magnified detail of section VI-VI indicated in the previous figure.
Figure 7 is a magnified detail of section VII-VII indicated in figure 5.
Figure 8 is a magnified detail of section VIII-VIII indicated in figure 5.
Figure 9 is an overview of the layout of the blocking mechanism of a folding joint of a hinge joint in a child's pushchair according to the invention, with the assembly connected by the hinge joint in a partially folded position.
Figure 10 is an overview as in the previous figure, in position with the hinge joint blocked.
Figure 11 is a detail of the connection of the two elements that make up the structural assembly of a child's pushchair, with a bolt with a concealed end.
Figure 12 is a detail of the connection of the two elements that make up the structural assembly of a child's pushchair, with a screw with a concealed end.

### Detailed description of the invention

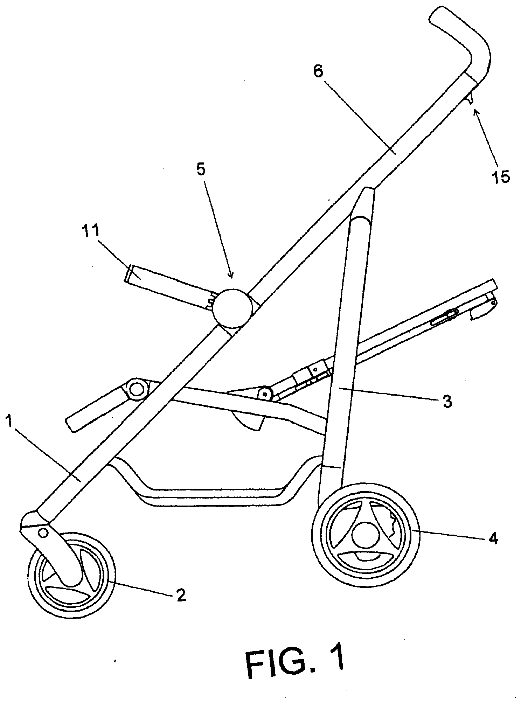

The invention refers to a child's pushchair movable by wheeling and adapted to be folded by folding down the middle area of its structural assembly, said structural assembly being composed, as shown in figure 1, of front uprights 1 which incorporate front wheels 2, and rear uprights 3 which incorporate rear wheels 4, with arms 6 being connected to the front uprights 1, by means of joints 5, to constitute a handle structure for handling the pushchair such that by folding at
the joints 5 the structural assembly can be folded into a position for storage and transport of the pushchair and unfolded to an extended position for the pushchair to be used.

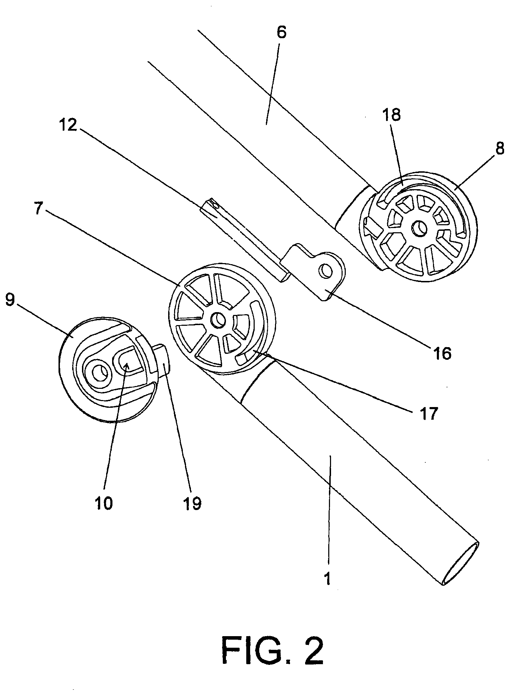

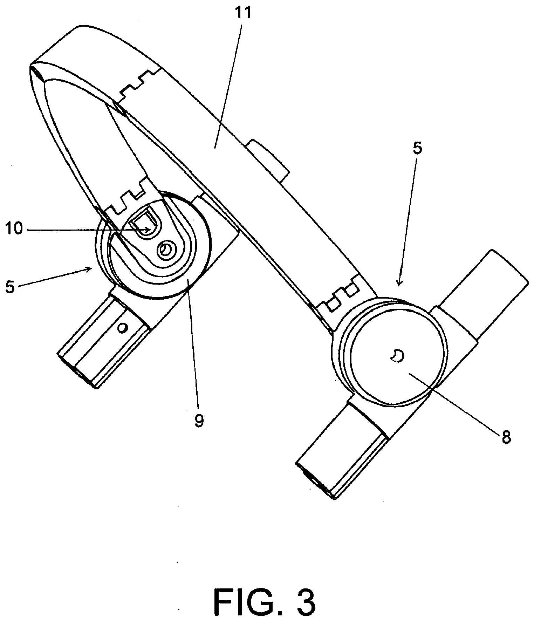

The joints 5 are made up of hinge joints which, as can be observed in figure 2, are made up of three parts in the form of discs coupled to each other, comprising a part 7 that is attached to the corresponding front upright 1 of the structural assembly, a part 8 that is attached to the corresponding arm 6 of the handle and an independent part 9 that is attached to the assembly formed by the other two parts 7 and 8, this part 9 determining a coupling fitting 10 for assembling a crossbar 11 for supporting the child using the pushchair, as can be observed in figure 3.

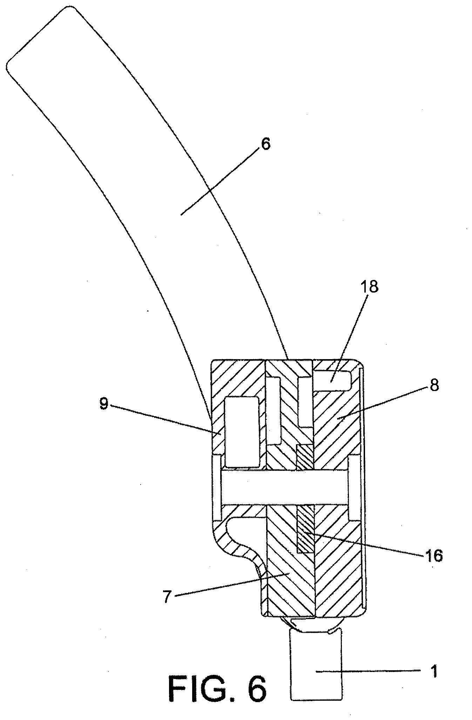

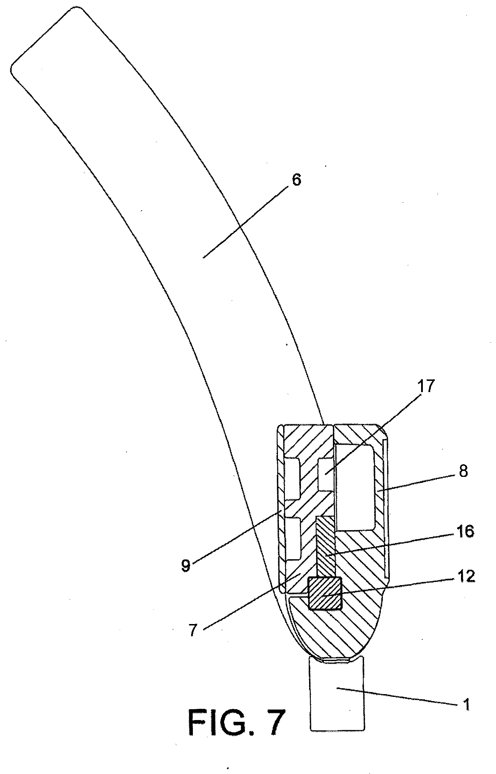

According to figures 6, 7, 9 and 10, in relation to the part 8 that is attached to the arm 6 of the handle of the structural assembly of the pushchair, a mobile latch part 12 is fitted that is likely to move in the axial direction of the arm 6, this latch part 12 being pushed by a spring 13 towards the hinge joint and attached by means of a cable 14 to a trigger 15 provided in the handle area, so that by activation of this trigger 15 the latch part 12 can be moved backwards against the spring 13. In addition, a fixed part 16 with respect to which the latch part 12 can be locked and unlocked is arranged in the part 7, which is attached to the front upright 1.

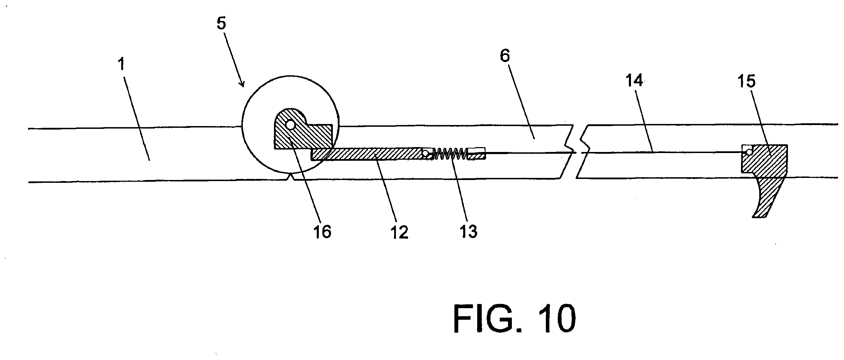

In this way, when the structural assembly of the pushchair is unfolded, in the extended position, the hinge joints of the joints 5 are blocked because the latch part 12 is locked into position on them with respect to the fixed part 16, thanks to the pushing of the corresponding spring 13, as can be observed in figure 10, which makes the entire structural assembly rigid and stable in the unfolded position so that the pushchair can be used safely and comfortably.

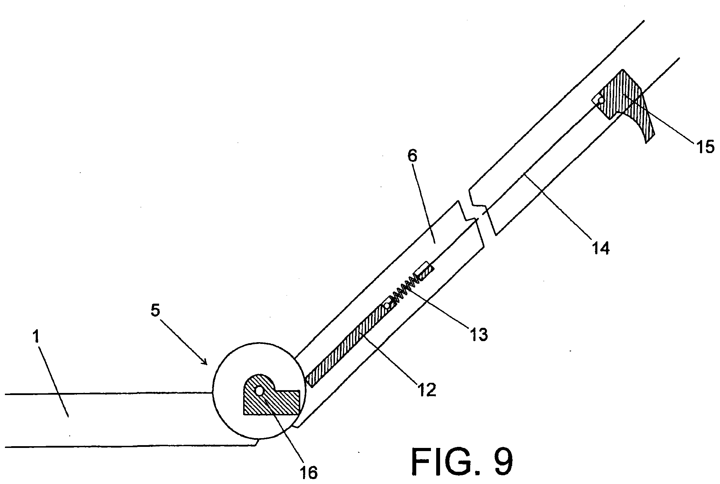

To fold the pushchair down from this unfolded position, it is therefore necessary to unblock the hinge joints of the joints 5 in relation to which the trigger 5 acts to move the latch part 12 backwards against the push spring 13, thus producing unlocking with respect to the fixed part 16 and leaving the joint of the ball joint free, with the structural assembly being able to be folded down for folding away as can be observed in figure 9.

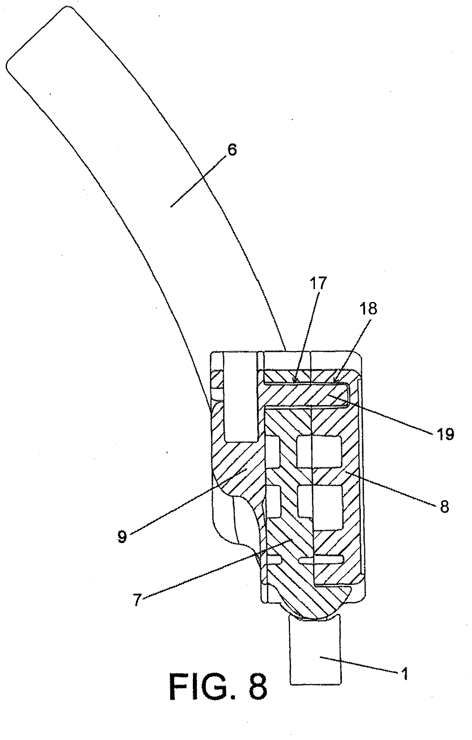

In these hinge joints of the joints 5 for folding the structural assembly of the pushchair, the parts 7 and 8 have respective grooves 17 and 18 concentrically arched with respect to the centre, which are facing each other in such a way that their facing zone varies when the joint of the hinge joint is rotated; while the third part 9 has a perpendicular tab 19 that runs through the above-mentioned grooves 17 and 18 of the two parts 7 and 8, as can be observed in figure 8; so that in the position of the hinge joint that corresponds to the unfolded position of the structural assembly of the pushchair, said tab 19 of the part 9 is trapped between the two ends of the grooves 17 and 18 in a position corresponding to the use of the crossbar 11 supporting the child using the pushchair; while when the pushchair is folded, the relative movement between the parts 7 and 8 increases the area where the grooves 17 and 18 meet, thus leaving the crossbar 11 free to move in order to fold it down and allowing the entire structural assembly to be completely folded up.

In a particular embodiment, the constructive fitting of the structural assembly of the pushchair is planned with retention of the connections between the component elements through bolts 20 or screws 21, fitted in such a way that their front end is concealed, thus determining a better appearance of the pushchair.

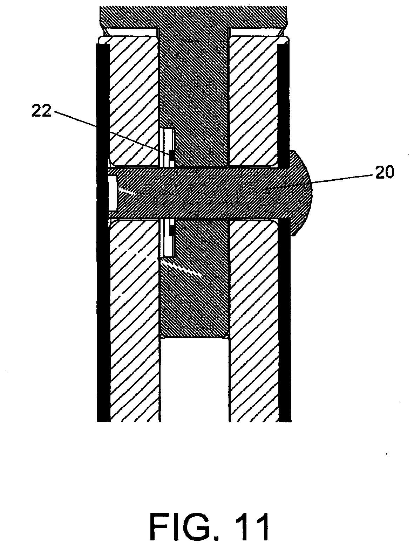

Therefore, in the case of retention with bolts 20 as can be observed in figure 11, the bolt 20 runs crosswise through the connected elements with lateral entry on one side but without coming out on the other side, with a connecting washer 22 being incorporated inside the connection through which the bolt 20 runs at the same time as it runs through the elements joined together.

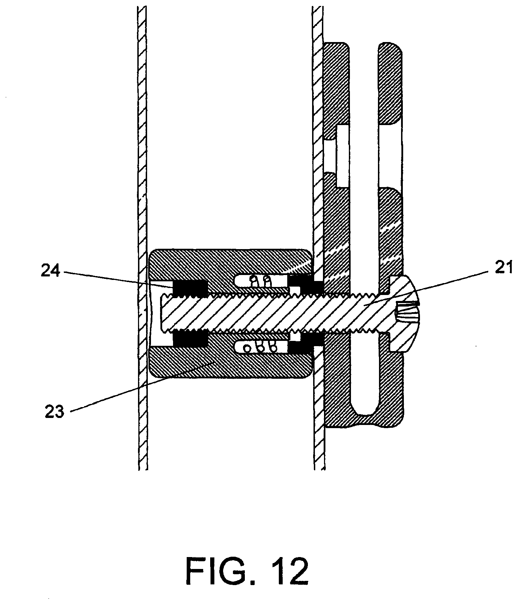

In the case of retention with screws 21, as can be observed in figure 12, inside one of the elements to be joined is a part 23 mounted with a flexible fitting housing a nut 24 in which the connection retaining screw 21 is fitted. It is inserted on one side and runs through the elements that are connected without coming out on the other side.

## Claims

1. Folding child's pushchair, made up of a structural assembly that is capable of folding in the middle, by means of joints (5) that join a first structural part made up of front uprights (1) and a second structural part formed by arms (6) that make up a handle structure for handling the pushchair,
wherein the joints (5) are made up of hinge joints that are composed of parts in the form of discs attached to each other, and comprise a first part (7) that is attached to the corresponding front upright (1), a second part (8) that is attached to the corresponding arm (6) of the handle structure and an independent part (9), to which a crossbar (11) is attached, for supporting the child using the pushchair, this independent part (9) having a perpendicular tab (19) running through the first and second parts (7 and 8) through grooves (17 and 18) facing each other, a mobile latch part (12) connected to the second part (8) being pushed by a spring (13) towards the hinge joint, and a fixed part (16), with respect to which the latch part (12) can be locked and unlocked to block and unblock the rotation of the hinge joint,
wherein the first part (7), the second part (8) and the independent part (9) each comprise a central through hole, the central through holes being coaxial,
said folding child's pushchair being **characterised in that** said fixed part (16) comprises a through hole coaxial with the central through holes and is arranged in a recess formed in the first part (7) facing the second part (8), the recess being formed such that the central through hole of the first part (7) opens into the recess and the fixed part (16) is in contact with the second part (8).

2. Child's pushchair according to claim 1, **characterised in that** the latch part (12) is attached by means of a cable (14) to a trigger (15) provided in the handle area, so that by activation of this trigger (15) the latch part (12) can be moved backwards against the spring (13).

3. Child's pushchair according to claim 1 or 2, **characterised in that** the independent part (9) determines a coupling fitting (10) for assembling said crossbar (11) for supporting the child using the pushchair.

4. Child's pushchair according to any one of claims 1 to 3, **characterised in that** the grooves (17 and 18) of the first and second parts (7 and 8) are concentrically arched with respect to the centre of the hinge joint, these grooves (17 and 18) facing each other in such a way that their facing zone varies when the hinge joint is rotated.

## Patentansprüche

1. Zusammenklappbarer Kinderwagen, bestehend aus einer Strukturanordnung, die in der Lage ist, sich in der Mitte mittels Gelenken (5) zusammenzufalten, die einen ersten Strukturteil, der aus vorderen aufrechten Stangen (1) besteht, und einen zweiten Strukturteil, der durch Arme (6) gebildet wird, die eine Griffstruktur für die Handhabung des Kinderwagens bilden, verbinden,
wobei die Gelenke (5) aus Scharniergelenken bestehen, die aus Teilen in Form von aneinander befestigten Scheiben bestehen und die einen ersten Teil (7), der an der entsprechenden vorderen aufrechten Stange (1) befestigt ist, einen zweiten Teil (8), der an dem entsprechenden Arm (6) der Griffstruktur befestigt ist, und einen unabhängigen Teil (9), an dem eine Querstange (11) befestigt ist, um das Kind, das im Kinderwagen sitzt, zu tragen, wobei dieser unabhängige Teil (9) eine senkrechte Lasche (19) aufweist, die durch einander zugewandte Nuten (17 und 18) durch den ersten und zweiten Teil (7 und 8) verläuft, einen beweglichen Verriegelungsteil (12), der mit dem zweiten Teil (8) verbunden ist und durch eine Feder (13) gegen das Scharniergelenk gedrückt wird, und einen feststehenden Teil (16) umfassen, mit dem der Verriegelungsteil (12) verriegelt und entriegelt werden kann, um die Drehung des Scharniergelenks zu sperren und zu entsperren,
wobei der erste Teil (7), der zweite Teil (8) und der unabhängige Teil (9) jeweils ein zentrales Durchgangsloch umfassen, wobei die zentralen Durchgangslöcher koaxial sind,
wobei der zusammenklappbare Kinderwagen **dadurch gekennzeichnet ist, dass** der feststehende Teil (16) ein zu den zentralen Durchgangslöchern koaxiales Durchgangsloch aufweist und in einer Ausnehmung angeordnet ist, die im ersten Teil (7) dem zweiten Teil (8) zugewandt ausgebildet ist, wobei die Ausnehmung so geformt ist, dass das zentrale Durchgangsloch des ersten Teils (7) sich in die Ausnehmung hinein öffnet und der feste Teil (16) in Kontakt mit dem zweiten Teil (8) ist.

2. Kinderwagen nach Anspruch 1, **dadurch gekennzeichnet, dass** der Verriegelungsteil (12) mittels eines Seilzuges (14) zu einem Auslöser (15), der im Griffbereich vorgesehen ist, befestigt ist, so dass durch Aktivierung dieses Auslösers (15) der Verriegelungsteil (12) gegen die Feder (13) zurückbewegt werden kann.

3. Kinderwagen nach Anspruch 1 oder 2, **dadurch gekennzeichnet, dass** der unabhängige Teil (9) einen Kupplungsbeschlag (10) zum Zusammensetzen der Querstange (11) zum Tragen des Kindes, das den Kinderwagen benutzt, bestimmt.

4. Kinderwagen nach einem der Ansprüche 1 bis 3, **dadurch gekennzeichnet, dass** die Nuten (17 und 18) der ersten und zweiten Teile (7 und 8) in Bezug auf die Mitte des Scharniergelenks konzentrisch gekrümmt sind, wobei diese Nuten (17 und 18) derart einander zugewandt sind, dass sich ihre gegenüberliegende Zone verändert, wenn das Scharniergelenk gedreht wird.

## Revendications

1. Poussette pliante pour enfant, composée d'un ensemble structurel qui peut se plier au milieu, au moyen de joints (5) qui assemblent une première partie structurelle composée de montants avant (1) et une seconde partie structurelle formée par des bras (6) qui composent une structure de poignée pour manoeuvrer la poussette,
dans laquelle les joints (5) sont composés de joints de charnière qui sont composés de parties se présentant sous la forme de disques fixés entre eux, et comprennent une première partie (7) qui est fixée au montant avant (1) correspondant, une seconde partie (8) qui est fixée au bras (6) correspondant de la structure de poignée et une partie correspondante (9) à laquelle une traverse (11) est fixée, pour supporter l'enfant utilisant la poussette, cette partie indépendante (9) ayant une languette perpendiculaire (19) s'étendant à travers les première et seconde parties (7 et 8) à travers des rainures (17 et 18) se faisant face, une partie de verrou mobile (12) raccordée à la seconde partie (8) qui est poussée par un ressort (13) vers le joint de charnière, et une partie fixe (16) par rapport à laquelle la partie de verrou (12) peut être verrouillée et déverrouillée pour bloquer et débloquer la rotation du joint de charnière,
dans laquelle la première partie (7), la seconde partie (8) et la partie indépendante (9) comprennent chacune un trou débouchant central, les trous débouchants centraux étant coaxiaux,
ladite poussette pliante pour enfant étant **caractérisée en ce que** ladite partie fixe (16) comprend un trou débouchant coaxial par rapport aux trous débouchants centraux et est agencée dans un évidement formé dans la première partie (7) faisant face à la seconde partie (8), l'évidement étant formé de sorte que le trou débouchant central de la première partie (7) s'ouvre dans l'évidement et la partie fixe (16) est en contact avec la seconde partie (8).

2. Poussette pour enfant selon la revendication 1, **caractérisée en ce que** la partie de verrou (12) est fixée au moyen d'un câble (14) à une gâchette (15) prévue dans la zone de poignée, de sorte que par l'activation de cette gâchette (15), la partie de verrou (12) peut être déplacée vers l'arrière contre le ressort (13).

3. Poussette pour enfant selon la revendication 1 ou 2, **caractérisée en ce que** la partie indépendante (9) détermine un raccord de couplage (10) pour assembler ladite traverse (11) pour supporter l'enfant utilisant la poussette.

4. Poussette pour enfant selon l'une quelconque des revendications 1 à 3, **caractérisée en ce que** les rainures (17 et 18) des première et seconde parties (7 et 8) sont arquées de manière concentrique par rapport au centre du joint de charnière, ces rainures (17 et 18) se faisant face de sorte que leur zone en vis-à-vis varie lorsque le joint de charnière est entraîné en rotation.
